# EUROPEAN PATENT APPLICATION

(11) **EP 4 424 491 A1**
(43) Date of publication of application: **04.09.2024**
(21) Application number: 22886361.9
(22) Date of filing: 06.05.2022
(51) Int. Cl.: B29C 48/92, B29B 7/38, B29B 7/72, B29B 7/90, B29C 48/285

(54) **KNEADING EXTRUDER, CONTROL METHOD THEREFOR, AND PRODUCTION METHOD FOR RESIN COMPOUND**

(30) Priority: 28.10.2021 JP 2021176036
(71) Applicant: The Japan Steel Works, Ltd., Tokyo 141-0032 (JP)
(72) Inventor: KOIWA Tetsuya, Tokyo 141-0032 (JP); UEDA Yoshiki, Tokyo 141-0032 (JP); SAGA Daigo, Tokyo 141-0032 (JP); BABA Takayuki, Tokyo 141-0032 (JP)
(74) Representative: Simmons & Simmons LLP (Munich)
(86) International application number: PCT/JP2022/019598
(87) International publication number: WO 2023/074024

(57) **Abstract**

This kneading extruder: increases the screw rotation speed of an extruder and increases the amount of resin raw material supplied, on the basis of a predetermined startup supply pattern for the resin raw material, when the extruder for producing a resin compound is started; starts supply of a filler after the resin raw material supply has started, on the basis of the predetermined filler startup supply pattern, and increases the screw rotation speed and the amount of filler supplied.

## Description

### Technical Field

The present invention relates to a kneading extrusion apparatus, its control method, and a method for manufacturing a resin compound.

### Background Art

As shown in Patent Literature 1, the inventors have previously developed a method for automatically controlling an extruder when the extruder is started in a kneading extrusion apparatus.

### Citation List

### Patent Literature

Patent Literature 1: Japanese Unexamined Patent Application Publication No. 2019-69585

### Summary of Invention

The inventors have examined automatic control for an extruder in a kneading extrusion apparatus that is performed when the extruder is started or stopped.

The inventors have found that the following problem occurs when a resin compound containing a filler as well as a resin raw material is manufactured by using a kneading extrusion apparatus.

Since the filler does not melt inside the extruder, its flowability inside the extruder is low. Therefore, if the filler is supplied to the extruder in a state where there is no resin raw material inside the extruder, there is a risk that the extruder could break down, so it is necessary to be particularly careful in performing the automatic control when the extruder is started or stopped.

Other problems to be solved and new features will become apparent from the following specification and the attached drawings.

In a kneading extrusion apparatus according to an embodiment, when an extruder is started in order to manufacture a resin compound, an amount of a resin raw material to be supplied is increased with an increase in a rotation speed of a screw of the extruder based on a predetermined starting-time supply pattern for the resin raw material, and based on a predetermined starting-time supply pattern for a filler, a supply of the filler is started after the supplying of the resin raw material is started, and an amount of the filler to be supplied is increased with the increase in the rotation speed of the screw.

In a kneading extrusion apparatus according to an embodiment, when an extruder is stopped, an amount of a resin raw material to be supplied is reduced with a decrease in a rotation speed of a screw of the extruder based on a predetermined stopping-time supply pattern for the resin raw material, and based on a predetermined stopping-time supply pattern for a filler, an amount of the filler to be supplied is reduced with the increase in the rotation speed of the screw, and the supply of the filler is stopped before the supplying of the resin raw material is stopped.

According to the above-described embodiment, it is possible to provide an excellent kneading extrusion apparatus.

### Brief Description of Drawings

Fig. 1 is a schematic cross-sectional diagram showing an overall configuration of a kneading extrusion apparatus according to a first embodiment;
Fig. 2 is a control block diagram of the kneading extrusion apparatus according to the first embodiment;
Fig. 3 is a graph showing a starting-time supply pattern for a resin raw material and that of a filler, stored in a storage unit MEM;
Fig. 4 is a graph showing a stopping-time supply pattern for the resin raw material and that for the filler, stored in the storage unit MEM;
Fig. 5 is a graph showing a cleaning-time supply pattern for the resin raw material, stored in the storage unit MEM;
Fig. 6 is a schematic cross-sectional diagram showing an overall configuration of a kneading extrusion apparatus according to a second embodiment;
Fig. 7 is a control block diagram of the kneading extrusion apparatus according to the second embodiment;
Fig. 8 is a graph showing starting-time supply patterns for a resin raw material, a filler, and an additive, stored in a storage unit MEM;
Fig. 9 is a graph showing stopping-time supply patterns for the resin raw materials, the filler, and the additive, stored in the storage unit MEM;
Fig. 10 is a schematic cross-sectional diagram showing an overall configuration of a kneading extrusion apparatus according to a third embodiment; and
Fig. 11 is a control block diagram of the kneading extrusion apparatus according to the third embodiment.

### Description of Embodiments

Specific embodiments will be described hereinafter in detail with reference to the drawings. However, the present disclosure is not limited to the following embodiments. Further, the following description and drawings are simplified as appropriate for clarifying the explanation.

### (First Embodiment)

### <Overall Configuration of Kneading Extrusion Apparatus>

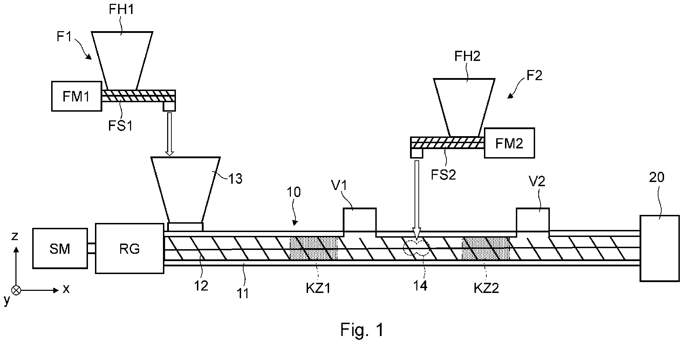

Firstly, an overall configuration of a kneading extrusion apparatus according to a first embodiment will be described with reference to Fig. 1. Fig. 1 is a schematic cross-sectional diagram showing the overall configuration of the kneading extrusion apparatus according to the first embodiment. A resin compound containing a filler dispersed in the resin is extruded and molded by using the kneading extrusion apparatus according to this embodiment. The resin compound extruded and molded by the kneading extrusion apparatus according to this embodiment has, for example, a strand-like shape. However, the shape of the extruded and molded resin compound is not limited to any particular shapes, and it may have, for example, a film-like shape.

As shown in Fig. 1, the kneading extrusion apparatus according to the first embodiment includes a resin raw material feeder F1, a filler feeder F2, an extruder 10, and a die 20.

Note that, needless to say, right-handed xyz-orthogonal coordinates shown in Fig. 1 and other drawings are shown just for explaining the positional relationship among the components. In general, the z-axis positive direction is vertically upward and the xy-plane is a horizontal plane, and these directions and the like are the same throughout the drawings.

The resin raw material feeder (first feeder) F1 is a feeder for supplying a resin raw material, which is a main raw material of a resin compound, into the cylinder 11 of the extruder 10. The resin raw material feeder F1 shown in Fig. 1 is a screw-type feeder and includes a feeder hopper FH1, a feeder screw FS1, and a feeder motor FM1.

The resin raw material is not limited to any particular materials, and is, for example, resin pellets or the like made of polypropylene, polyethylene, polyamide, polyethylene terephthalate, or the like.

The resin raw material is charged into the feeder hopper FH1 and stored therein. When the feeder screw FS1 is rotationally driven by the feeder motor FM1, the resin raw material stored in the feeder hopper FH1 is supplied into the cylinder 11 through a hopper 13 of the extruder 10. For example, it is possible to control the supply amount of the resin raw material from the resin raw material feeder F1 to the extruder 10 by measuring the change in the mass of the resin raw material in the feeder hopper FH1 and performing feedback control on the rotation of the feeder motor FM1 based on the measured change.

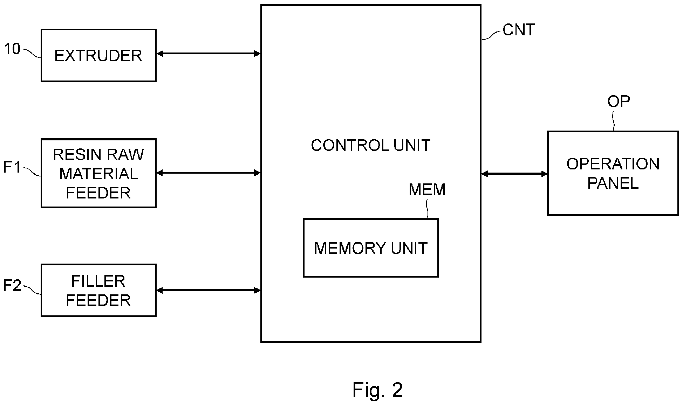

As will be described later in detail, the supply amount of the resin raw material from the resin raw material feeder F1 to the extruder 10 is controlled by a controller CNT shown in Fig. 2. Although the resin raw material feeder F1 shown in Fig. 1 is a screw-type feeder, a vibration-type feeder or any of other type of feeder may be used as long as the supply amount of the resin raw material can be controlled by the controller CNT, i.e., by a computer.

The filler feeder (second feeder) F2 is a feeder for supplying a filler, which is one of the components constituting the resin compound, into the cylinder 11 of the extruder 10. The filler feeder F2 shown in Fig. 1 is a screw-type feeder and includes a feeder hopper FH2, a feeder screw FS2, and a feeder motor FM2.

The filler is not limited to any particular fillers, and is, for example, talc, a calcium carbonate powder, glass fibers, a carbon powder, or the like.

The filler is charged into the feeder hopper FH2 and stored therein. When the feeder screw FS2 is rotationally driven by the feeder motor FM2, the filler stored in the feeder hopper FH2 is supplied into the cylinder 11 through a side supply port 14 of the extruder 10. For example, it is possible to control the supply amount of the filler from the filler feeder F2 to the extruder 10 by measuring the change in the mass of the filler in the feeder hopper FH2 and performing feedback control on the rotation of the feeder motor FM2 based on the measured change.

As will be described later in detail, the supply amount of the filler from the filler feeder F2 to the extruder 10 is controlled by the controller CNT shown in Fig. 2. Although the filler feeder F2 shown in Fig. 1 is a screw-type feeder, a vibration-type feeder or any of other types of feeders may be used as long as the supply amount of the filler can be controlled by the controller CNT, i.e., by a computer.

Note that a side feeder may be provided between the filler feeder F2 and the side supply port 14, and the filler sent from the filler feeder F2 may be charged into the side supply port 14 through the side feeder. Alternatively, the filler may be supplied from the filler feeder F2 into the cylinder 11 through the hopper 13 of the extruder 10 instead of being supplied through the side supply port 14.

The extruder 10 is a screw extruder. In the extruder 10 shown in Fig. 1, a screw 12 extending in the x-axis direction is housed inside the cylinder 11 extending in the x-axis direction. The hopper (first supply port) 13 for supplying the resin raw material from the resin raw material feeder F1 into the cylinder 11 is provided above the end part of the cylinder 11 on the upstream side thereof in the extrusion direction (i.e., on the x-axis negative side). The side supply port (second supply port) 14 for supplying the filler from the filler feeder F2 is provided on the side surface of the cylinder 11 on the downstream side in the extrusion direction (i.e., on the x-axis positive side), that is, on the die 20 side from the hopper 13. In the following description, the upstream side of the cylinder 11 in the extrusion direction is simply referred to as the "upstream side", and the downstream side thereof in the extrusion direction is simply referred to as the "downstream side".

A screw motor SM is connected to the root of the screw 12 with a reduction gear RG interposed therebetween. The screw motor SM is a driving source for driving the screw 12. For example, it is possible to control the rotation speed of the screw 12 by controlling the rotation speed of the screw motor SM.

Note that the screw 12 may be composed of one screw or a plurality of screws. For example, an extruder 10 including only one screw 12 is called a single-screw extruder, and an extruder 10 including two screws 12 is called a twin-screw extruder.

The resin raw material supplied from the hopper 13 is conveyed by the screw motor SM from the root of the rotating screw 12 to the tip thereof, i.e., from the upstream side to the downstream side. The resin raw material is heated and sheared by the rotating screw 12 inside the cylinder 11, so that the resin raw material is melted.

Note that although it is not shown in the drawings, a heater(s) for heating the interior of the cylinder 11 is provided on the outer peripheral surface of the cylinder 11 over substantially the entire area thereof in the longitudinal direction.

Note that the shearing and melting of the resin raw material supplied from the hopper 13 are mainly carried out in a kneading zone KZ1 of the extruder 10 shown in Fig. 1.

Further, a vent V1 is provided in the upper surface of the cylinder 11 on the downstream side near the kneading zone KZ1. For example, air and volatile components contained in the resin raw material are discharged through the vent V1.

On the downstream side of the vent V1, the side supply port 14 for supplying a filler is provided on the side surface of the cylinder 11. The filler supplied from the side supply port 14 is conveyed to the downstream side together with the molten resin raw material. A kneading zone KZ2 of the extruder 10 is provided on the downstream side of the side supply port 14. In the kneading zone KZ2, the molten resin raw material and the filler are mixed and kneaded, so that the filler is uniformly dispersed in the molten resin raw material.

A vent V2 is provided in the upper surface of the cylinder 11 on the downstream side near the kneading zone KZ2. The vent V2 is decompressed by, for example, a vacuum pump (not shown). For example, air and volatile components contained in the resin raw material and the filler are further discharged through the vent V2.

Note that the vents V1 and V2 are not indispensable.

As shown in Fig. 1, g is connected to the tip (i.e., the end part on the x-axis positive side) of the extruder 10. The resin raw material and the filler, which have been mixed and kneaded in the extruder 10, are molded into, for example, a strand-like resin compound by the die 20. That is, a strand-like resin compound is manufactured by the kneading extrusion apparatus according to this embodiment.

Note that, for example, pellets, which are used as a raw material for a resin molded article, are obtained by cutting this strand-like resin compound. Further, the die 20 is not indispensable. That is, the resin compound may be just extruded without being molded into a resin molded article.

### <Configuration of Controller of Kneading Extrusion Apparatus>

Next, a configuration of a controller of a kneading extrusion apparatus according to this embodiment will be described with reference to Fig. 2. Fig. 2 is a control block diagram of the kneading extrusion apparatus according to the first embodiment. As shown in Fig. 2, the kneading extrusion apparatus according to the first embodiment includes a controller CNT and an operation panel OP.

As shown in Fig. 2, the controller CNT controls the extruder 10, the resin raw material feeder F1, and the filler feeder F2.

More specifically, the controller CNT controls the rotation speed of the screw 12. In the example shown in Fig. 1, the controller CNT controls the rotation speed of the screw 12, for example, but not limited to, by controlling the rotation speed of the screw motor SM. Further, the controller CNT controls the supply amount of the resin raw material from the resin raw material feeder F1 and the supply amount of the filler from the filler feeder F2.

Note that as shown in Fig. 2, the controller CNT includes a memory unit MEM.

In the memory unit MEM, a starting-time supply pattern for the resin raw material and that for the filler, which are used when the extruder 10 is started in order to manufacture a resin compound, are stored. Each of the starting-time supply patterns for the resin raw material and for the filler is determined in advance.

Details of the starting-time supply patterns for the resin raw material and for the filler will be described later.

Further, in the memory unit MEM, a stopping-time supply pattern for the resin raw material and that for the filler, which are used when the extruder 10 is stopped, are stored. Each of the stopping-time supply patterns for the resin raw material and for the filler is determined in advance.

Details of the stopping-time supply patterns for the resin raw material and for the filler will be described later.

Note that in the memory unit MEM, at least one of the starting-time supply patterns for the resin raw material and for the filler or the stopping-time supply patterns for the resin raw material and for the filler may be stored.

Further, in the memory unit MEM, a cleaning-time supply pattern for the resin raw material for supplying the resin raw material when the interior of the cylinder 11 of the extruder 10 is cleaned is stored. The cleaning-time supply pattern for the resin raw material is determined in advance. For example, after the screw 12 is replaced in order to change the type of the resin compound to be manufactured, the interior of the cylinder 11 is cleaned before the extruder 10 is started in order to manufacture the resin compound. During the cleaning, only the resin raw material is supplied into the cylinder 11.

Details of the cleaning-time supply pattern for the resin raw material will be described later.

Note that the controller CNT can be implemented by a CPU (Central Processing Unit) or other circuits in addition to the memory unit MEM when it is implemented by hardware, and can be implemented by a program or the like loaded into the memory unit MEM when it is implemented by software. Therefore, the controller CNT can be implemented in various forms by computer hardware, software, or a combination thereof.

Further, the memory unit MEM may be provided outside the controller CNT.

The operation panel OP is an input device by which an operator operates the kneading extrusion apparatus. The operator enters, through the operation panel OP, the rotation speed of the screw 12 during the manufacturing, and the supply amounts of the resin raw material and the filler. Further, the operator selects the type of the raw material and the supply position (the hopper 13 or the side supply port 14) from which the raw material is supplied.

For example, in the case of the kneading extrusion apparatus according to this embodiment, the resin raw material is selected as the type of the raw material and the hopper 13 is selected as the supply position. Further, the filler is selected as the type of another raw material and the side supply port 14 is selected as the supply position.

### <Control method at Start>

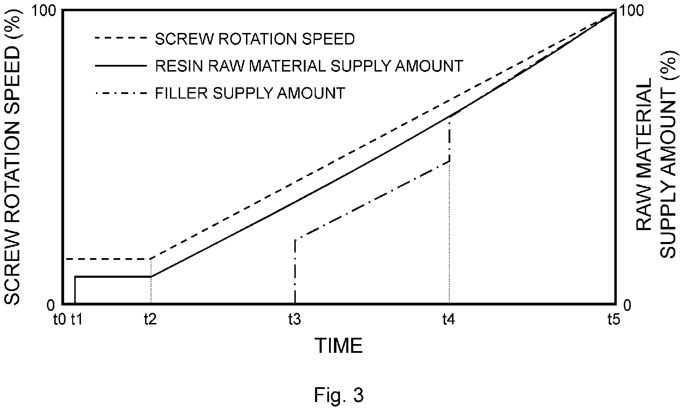

Next, a method for controlling the kneading extrusion apparatus when the extruder 10 is started in order to manufacture a resin compound will be described with reference to Fig. 3.

Fig. 3 is a graph showing a starting-time supply pattern for a resin raw material and that for a filler, stored in the memory unit MEM. In Fig. 3, the horizontal axis indicates time, and the left-side vertical axis indicates the rotation speed of the screw 12. Further, the right-side vertical axis indicates the supply amounts of the resin raw material and the filler. In Fig. 3, the rotation speed of the screw 12 is shown as a percentage (%) to the target rotation speed during the manufacturing. Similarly, in Fig. 3, the supply amounts of the resin raw material and the filler are shown as percentages (%) to the target supply amounts during the manufacturing.

When the extruder 10 is started in order to manufacture a resin compound, an operator enters, through the operation panel OP, the target rotation speed of the screw 12 during the manufacturing and the target supply amounts of the resin raw material and the filler. Note that in the case where the above-described conditions are stored in the memory unit MEM in advance, the operator may, for example, select them from a list of conditions displayed in the operation panel OP instead of entering them.

Further, in the operation panel OP, the operator selects a resin raw material as the type of raw material and also selects the hopper 13 as the supply position thereof. Further, the operator also selects a filler as a type of another raw material and selects the side supply port 14 as the supply position thereof.

The controller CNT reads out the starting-time supply patterns for the resin raw material and for the filler shown in Fig. 3 from the memory unit MEM based on the above-described input information received from the operation panel OP.

The controller CNT controls the rotation speed of the screw 12 so that the screw 12 rotates according to a rotation speed curve for the screw 12 shown by a broken line in Fig. 3. Further, the controller CNT controls the resin raw material feeder F1 so that the resin raw material is supplied according to a resin raw material supply amount curve shown by a solid line in Fig. 3. Further, the controller CNT controls the filler feeder F2 so that the filler is supplied according to a filler supply amount curve shown by a dash-dot line in Fig. 3.

Details of a method for controlling the kneading extrusion apparatus when the extruder 10 is started in order to manufacture a resin compound will be described hereinafter with reference to Fig. 3.

Firstly, after the rotation of the screw 12 is started at a time t0, the supply of the resin raw material is started at a time t1 while maintaining the rotation speed of the screw 12 constant.

During a period from the time t1 to a time t2, the rotation speed of the screw 12 and the supply amount of the resin raw material are maintained constant so that the resin raw material is sufficiently charged into the cylinder 11.

At and after the time t2, the rotation speed of the screw 12 is gradually increased, and the supply amount of the resin raw material is increased with the increase in the rotation speed. Note that as shown in Fig. 3, at the time t2, the ratio of the supply amount of the resin raw material to the rotation speed of the screw 12 is smaller than the ratio during the manufacturing. Then, toward a starting completion time t5, the ratio of the supply amount of the resin raw material to the rotation speed of the screw 12 is gradually changed so as to approach the ratio during the manufacturing.

At a time t3, the supply of the filler is started, and the supply amount of the filler is increased with the increase in the rotation speed of the screw 12. Note that as shown in Fig. 3, during a period from the time t3 to a time t4, the ratio of the supply amount of the filler to the supply amount of the resin raw material is smaller than the ratio during the manufacturing. Since the ratio of the supply of the filler is lower than that during the manufacturing as described above, even if the kneading state inside the extruder 10 becomes unstable when the supply amounts of the resin raw material and the filler are being increased, it is possible to prevent these materials from being not able to be extruded from the inside of the extruder 10. As a result, the extruder 10 can be started in a shorter time.

At the time t4, the ratio of the supply amount of the filler to the supply amount of the resin raw material is increased to the ratio during the manufacturing, and then the ratio is maintained constant until the staring completion time t5.

As shown in Fig. 3, in the kneading extrusion apparatus according to this embodiment, when the extruder 10 is started in order to manufacture a resin compound, after the supplying of the resin raw material is started, the supply of the filler is started after the resin raw material is sufficiently charged into the cylinder 11. Therefore, the filler is never supplied in the state where there is not a sufficient amount of resin raw material in the extruder 10, so that it is possible prevent the extruder 10 from breaking down.

Note that the control method shown in Fig. 3 is not limited to control methods in which the time is monitored, and the rotation speed of the screw 12 and the supply amounts of the resin raw material and the filler are changed at a predetermined timing. For example, the control method may be one in which the rotation speed of the screw is monitored instead of monitoring the time, and the supply amounts of the resin raw material and the filler are changed when the rotation speed of the screw 12 reaches a predetermined rotation speed.

### <Control Method at Stop>

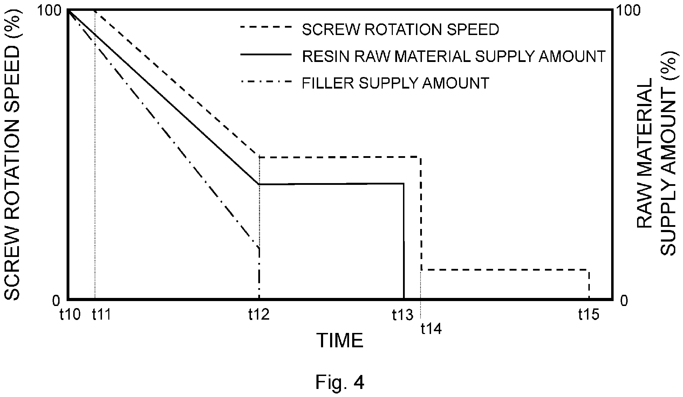

Next, a method for controlling the kneading extrusion apparatus when the extruder 10 is stopped will be described with reference to Fig. 4.

Fig. 4 is a graph showing a stopping-time supply pattern for a resin raw material and that for a filler, stored in the memory unit MEM. In Fig. 4, the horizontal axis indicates time, and the left-side vertical axis indicates the rotation speed of the screw 12. Further, the right-side vertical axis indicates the supply amounts of the resin raw material and the filler. In Fig. 4, the rotation speed of the screw 12 is shown as a percentage (%) to the rotation speed at the moment when the stopping operation is started. Similarly, in Fig. 3, the supply amounts of the resin raw material and the filler are shown as percentages (%) to the supply amounts at the moment when the stopping operation is started.

Note that the stopping operation is typically started during the manufacturing, but the start of the stopping operation is not limited to any particular timings. For example, the stopping operation can be started during the starting operation.

Similarly to the starting operation, the controller CNT reads out the stopping-time supply patterns for the resin raw material and for the filler shown in Fig. 4 from the memory unit MEM based on the input information received from the operation panel OP. The controller CNT controls the rotation speed of the screw 12 so that the screw 12 rotates according to a rotation speed curve for the screw 12 shown by a broken line in Fig. 4. Further, the controller CNT controls the resin raw material feeder F1 so that the resin raw material is supplied according to a resin raw material supply amount curve shown by a solid line in Fig. 4. Further, the controller CNT controls the filler feeder F2 so that the filler is supplied according to a filler supply amount curve shown by a dash-dot line in Fig. 4.

Details of a method for controlling the kneading extrusion apparatus when the extruder 10 is stopped will be described hereinafter with reference to Fig. 4.

Firstly, at a time t10, the supply amounts of the resin raw material and the filler are started to be gradually reduced while maintaining the rotation speed of the screw 12 constant. Note that if the rotation speed of the screw 12 is lowered first, there is a possibility that the ratios of the supply amounts of the resin raw material and the filler to the rotation speed of the screw 12 becomes so high that they may not be extruded.

Next, at a time t11, the rotation speed of the screw 12 is started to be gradually lowered.

During a period from the time t11 to a time t12, the rotation speed of the screw 12 is gradually lowered, and the supply amounts of the resin raw material and the filler are reduced with the decrease in the rotation speed. During this period, as shown in Fig. 4, the ratios of the supply amounts of the resin raw material and the filler to the rotation speed of the screw 12 is smaller than the ratio during the manufacturing.

Further, as shown in Fig. 4, during this period, the ratio of the supply amount of the filler to the supply amount of the resin raw material is gradually reduced. The content of the filler in the molten resin raw material gradually decreases and the viscosity of the molten resin raw material gradually decreases, so that the stopping operation is stabilized. For example, if the supply amount of the filler is sharply reduced, there is a possibility that the resin having high viscosity present on the downstream side becomes unable to be extruded by the resin having low viscosity present on the upstream side.

At a time t12, the supply of the filler is stopped.

During a period from the time t12 to a time t13, the rotation speed of the screw 12 and the supply amount of the resin raw material are maintained constant, and the interior of the cylinder 11 is cleaned by the resin raw material.

At the time t13, the supply of the resin raw material is stopped, and at a time t14, which is slightly later than the time t13, the rotation speed of the screw 12 is lowered.

The rotation speed of the screw 12 is maintained constant during a period from the time t14 to a stopping completion time t15, and the resin raw material remaining inside the cylinder 11 is discharged. It is preferred that the amount of the resin raw material remaining in the cylinder 11 be as small as possible.

Then, the rotation of the screw 12 is stopped at the stopping completion time t15.

As shown in Fig. 4, in the kneading extrusion apparatus according to this embodiment, when the extruder 10 is stopped, the supply of the filler is stopped before the supplying of the resin raw material is stopped. Therefore, the filler is never supplied in the state where there is not a sufficient amount of resin raw material in the extruder 10, so that it is possible prevent the extruder 10 from breaking down.

### <Control Method during Cleaning>

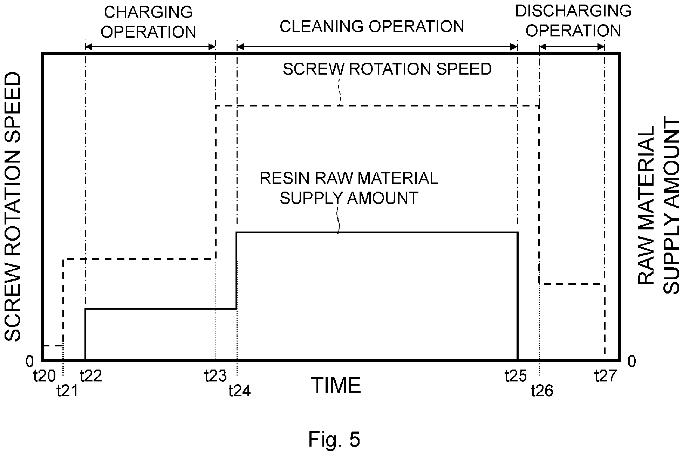

Next, a method for controlling the kneading extrusion apparatus when the interior of the cylinder 11 of the extruder 10 is cleaned will be described with reference to Fig. 5. For example, a cleaning operation is performed before the extruder 10 is started in order to manufacture a resin compound.

Fig. 5 is a graph showing a cleaning-time supply pattern for a resin raw material, stored in the memory unit MEM. In Fig. 5, the horizontal axis indicates time, and the left-side vertical axis indicates the rotation speed of the screw 12. Further, the right-side vertical axis indicates the supply amount of the resin raw material.

For example, when an operator instructs to perform cleaning through the operation panel OP, the controller CNT reads out the cleaning-time supply pattern for the resin raw material shown in Fig. 5 from the memory unit MEM. The controller CNT controls the rotation speed of the screw 12 so that the screw 12 rotates according to the rotation speed curve for the screw 12 shown by a broken line in Fig. 5. Further, the controller CNT controls the resin raw material feeder F1 so that the resin raw material is supplied according to a resin raw material supply amount curve shown by a solid line in Fig. 5. As shown in Fig. 5, during the cleaning, only the resin raw material is supplied into the cylinder 11 and the filler is not supplied into the cylinder 11.

Details of a method for controlling the kneading extrusion apparatus during the cleaning will be described hereinafter with reference to Fig. 5.

Firstly, at a time t20, the rotation of the screw 12 is started, and at a time t21, the rotation speed of the screw 12 is increased. The rotation speed, which has been increased at the time t21, is such a rotation speed that even when there is no resin raw material inside the cylinder 11, any abnormality such as wear does not occur in the cylinder 11 and the screw 12.

The rotation speed of the screw 12 is maintained constant during a period from the time t21 to a time t23.

At a time t22, the supply of the resin raw material is started.

During a period from the time t22 to a time t23, the rotation speed of the screw 12 and the supply amount of the resin raw material are maintained constant so that the resin raw material is sufficiently charged into the cylinder 11. That is, a charging operation is performed during the period from the time t22 to the time t23.

At the time t23, the rotation speed of the screw 12 is increased, and at a time t24, which is slightly later than the time t23, the supply amount of the resin raw material is increased.

During a period from the time t24 to a time t25, a cleaning operation is performed by maintaining the rotation speed of the screw 12 and the supply amount of the resin raw material constant.

At the time t25, the supply of the resin raw material is stopped, and at a time t26, which is slightly later than the time t25, the rotation speed of the screw 12 is lowered.

During a period from the time t26 to a cleaning completion time t27, the rotation speed of the screw 12 is maintained constant, and a discharging operation for discharging the resin raw material remaining in the cylinder 11 is performed.

Then, the rotation of the screw 12 is stopped at the cleaning completion time t27.

### (Second Embodiment)

### <Configuration of Kneading Extrusion Apparatus>

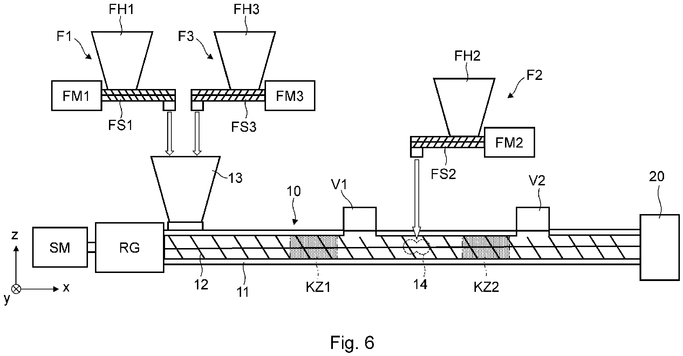

Next, an overall configuration of a kneading extrusion apparatus according to a second embodiment will be described with reference to Fig. 6. Fig. 6 is a schematic cross-sectional diagram showing the overall configuration of the kneading extrusion apparatus according to the second embodiment. Fig. 6 corresponds to Fig. 1.

As shown in Fig. 6, the kneading extrusion apparatus according to the second embodiment includes an additive feeder F3 in addition to the resin raw material feeder F1, the filler feeder F2, the extruder 10, and the die 20 shown in Fig. 1.

The additive feeder (third feeder) F3 is a feeder for supplying an additive(s), which is one of the components constituting the resin compound, into the cylinder 11 of the extruder 10. The additive feeder F3 shown in Fig. 6 is a screw-type feeder and includes a feeder hopper FH3, a feeder screw FS3, and a feeder motor FM3.

The additive is not limited to any particular additives, and is, for example, an antioxidant, a flame retardant, a crosslinking agent, or the like. Note that the additive may include a resin raw material of which the ratio of the supply is low.

An additive(s) is charged into the feeder hopper FH3 and stored therein. When the feeder screw FS2 is rotationally driven by the feeder motor FM3, the additive stored in the feeder hopper FH3 is supplied, together with the resin raw material, into the cylinder 11 through a hopper 13 of the extruder 10. For example, it is possible to control the supply amount of the additive from the additive feeder F3 to the extruder 10 by measuring the change in the mass of the additive in the feeder hopper FH3 and performing feedback control on the rotation of the feeder motor FM3 based on the measured change.

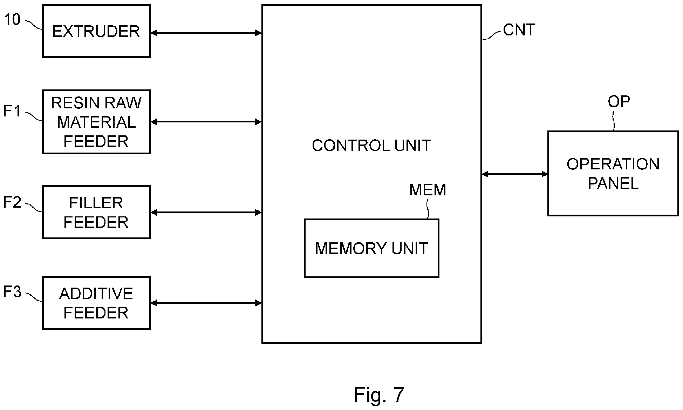

As will be described later in detail, the supply amount of the additive from the additive feeder F3 to the extruder 10 is controlled by the controller CNT shown in Fig. 7. Although the additive feeder F3 shown in Fig. 6 is a screw-type feeder, a vibration-type feeder or any of other types of feeders may be used as long as the supply amount of the additive can be controlled by the controller CNT, i.e., by a computer.

The rest of the configuration is similar to that of the kneading extrusion apparatus according to the first embodiment, and therefore the description thereof will be omitted.

### <Configuration of Controller of Kneading Extrusion Apparatus>

Next, a configuration of a controller of a kneading extrusion apparatus according to this embodiment will be described with reference to Fig. 7. Fig. 7 is a control block diagram of the kneading extrusion apparatus according to the second embodiment. Fig. 7 corresponds to Fig. 2.

As shown in Fig. 7, the kneading extrusion apparatus according to the second embodiment includes a controller CNT and an operation panel OP.

As shown in Fig. 7, the controller CNT controls an additive feeder F3 in addition to the extruder 10, the resin raw material feeder F1, and the filler feeder F2.

More specifically, the controller CNT controls the rotation speed of the screw 12. Further, the controller CNT controls the supply amount of the additive from the additive feeder F3 in addition to the supply amount of the resin raw material from the resin raw material feeder F 1 and the supply amount of the filler from the filler feeder F2.

Note that as shown in Fig. 7, the controller CNT includes a memory unit MEM.

In the memory unit MEM, a starting-time supply pattern for the resin raw material, that for the filler, and that for the additive, which are used when the extruder 10 is started in order to manufacture a resin compound, are stored. Each of the starting-time supply patterns for the resin raw material, the filler, and the additive is determined in advance.

Details of the starting-time supply patterns for the resin raw material, the filler, and the additive will be described later.

Further, in the memory unit MEM, a stopping-time supply pattern for the resin raw material, that for the filler, and that for the additive, which are used when the extruder 10 is stopped, are stored. Each of the stopping-time supply patterns for the resin raw material, the filler, and the additive is determined in advance.

Details of the stopping-time supply patterns for the resin raw material, the filler, and the additive will be described later.

Further, similarly to the first embodiment, in the memory unit MEM, a cleaning-time supply pattern for the resin raw material for supplying the resin raw material when the interior of the cylinder 11 of the extruder 10 is cleaned is stored. The cleaning-time supply pattern for the resin raw material is determined in advance.

The operation panel OP is an input device by which an operator operates the kneading extrusion apparatus. The operator enters, through the operation panel OP, the supply amount of the additive in addition to the rotation speed of the screw 12 during the manufacturing and the supply amounts of the resin raw material and the filler. Further, the operator selects the type of the raw material and the supply position thereof (the hopper 13 or the side supply port 14).

For example, in the case of the kneading extrusion apparatus according to this embodiment, the resin raw material is selected as the type of the raw material and the hopper 13 is selected as the supply position. Further, the filler is selected as the type of another raw material and the side supply port 14 is selected as the supply position. Further, the operator selects an additive(s) as a type of another raw material and also selects the hopper 13 as the supply position.

The rest of the configuration is similar to that of the kneading extrusion apparatus according to the first embodiment, and therefore the description thereof will be omitted.

### <Control method at Start>

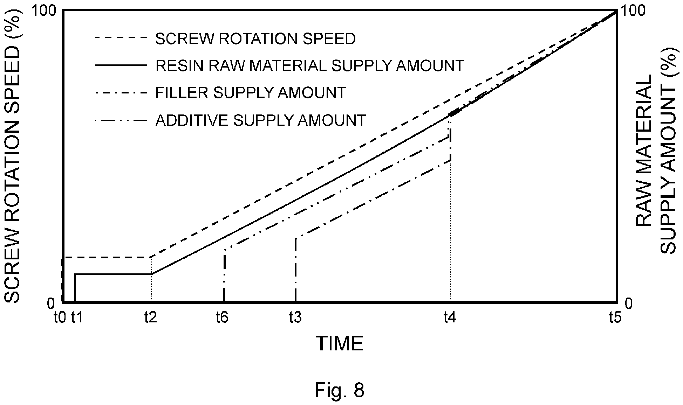

Next, a method for controlling the kneading extrusion apparatus when the extruder 10 is started in order to manufacture a resin compound will be described with reference to Fig. 8.

Fig. 8 is a graph showing a starting-time supply pattern for a resin raw material, that for a filler, and that for an additive, stored in the memory unit MEM. Fig. 8 shows a graph corresponding to that shown in Fig. 3.

In Fig. 8, the horizontal axis indicates time, and the left-side vertical axis indicates the rotation speed of the screw 12. Further, the right-side vertical axis indicates the supply amounts of the resin raw material, the filler, and the additive. In Fig. 8, the rotation speed of the screw 12 is shown as a percentage (%) to the target rotation speed during the manufacturing. Similarly, in Fig. 8, the supply amounts of the resin raw material, the filler, and the additive are shown as percentages (%) to the target supply amounts during the manufacturing.

When the extruder 10 is started in order to manufacture a resin compound, an operator enters, through the operation panel OP, the target rotation speed of the screw 12 during the manufacturing and the target supply amounts of the resin raw material, the filler, and the additive. Note that in the case where the above-described conditions are stored in the memory unit MEM in advance, the operator may, for example, select them from a list of conditions displayed in the operation panel OP instead of entering them.

Further, in the operation panel OP, the operator selects a resin raw material as the type of raw material and also selects the hopper 13 as the supply position thereof. Further, the operator also selects a filler as a type of another raw material and selects the side supply port 14 as the supply position thereof. Further, the operator selects an additive(s) as a type of another raw material and also selects the hopper 13 as the supply position thereof.

The controller CNT reads out the starting-time supply patterns for the resin raw material, the filler, and the additive shown in Fig. 8 from the memory unit MEM based on the above-described input information received from the operation panel OP.

The curve for the rotation speed of the screw 12 shown by a broken line in Fig. 8 is the same as the curve shown in Fig. 3. The controller CNT controls the rotation speed of the screw 12 so that the screw 12 rotates according to the curve.

Further, the curve for the supply amount of the resin raw material shown by a solid line in Fig. 8 is the same as the curve shown in Fig. 3. The controller CNT controls the resin raw material feeder F1 so that the resin raw material is supplied according to the curve.

Further, the curve for the supply amount of the filler shown by a dash-dot line in Fig. 8 is the same as the curve shown in Fig. 3. The controller CNT controls the filler feeder F2 so that the filler is supplied according to the curve.

In addition, in this embodiment, the controller CNT controls the additive feeder F3 so that the additive is supplied according to the curve for the supply amount of the additive shown by a dash-dot-dot line in Fig. 8.

Details of a method for controlling the kneading extrusion apparatus when the extruder 10 is started in order to manufacture a resin compound will be described hereinafter with reference to Fig. 8.

A period from a time t0 to a time t2 is similar to that in Fig. 3, and therefore the description thereof will be omitted.

In this embodiment, the supply of the additive is started at a time t6, which is later than the time t2 at which the supply of the resin raw material is started and earlier than the time t3 at which the supply of the filler is started, and the supply amount of the additive is increased with the increase in the rotation speed of the screw 12. Note that as shown in Fig. 8, during a period from the time t6 to the time t4, the ratio of the supply amount of the additive to the supply amount of the resin raw material is smaller than the ratio during the manufacturing.

After the time t6, at the time t3, the supply of the filler is started, and the supply amount of the filler is increased with the increase in the rotation speed of the screw 12. Note that as shown in Fig. 8, during the period from the time t3 to the time t4, the ratios of the supply amounts of the filler and the additive to the supply amount of the resin raw material are smaller than the ratios during the manufacturing. Since the ratio of the supply of the filler is lower than that during the manufacturing as described above, even if the kneading state inside the extruder 10 becomes unstable when the supply amounts of the resin raw material and the filler are being increased, it is possible to prevent these materials from being not able to be extruded from the inside of the extruder 10. As a result, the extruder 10 can be started in a shorter time.

At the time t4, the ratios of the supply amounts of the filler and the additive to the supply amount of the resin raw material are increased to the ratios during the manufacturing, and then the ratios are maintained constant until the staring completion time t5.

As shown in Fig. 8, even in the kneading extrusion apparatus according to this embodiment, when the extruder 10 is started in order to manufacture a resin compound, after the supplying of the resin raw material is started, the supply of the filler is started after the resin raw material is sufficiently charged into the cylinder 11. Therefore, the filler is never supplied in the state where there is not a sufficient amount of resin raw material in the extruder 10, so that it is possible prevent the extruder 10 from breaking down.

### <Control Method at Stop>

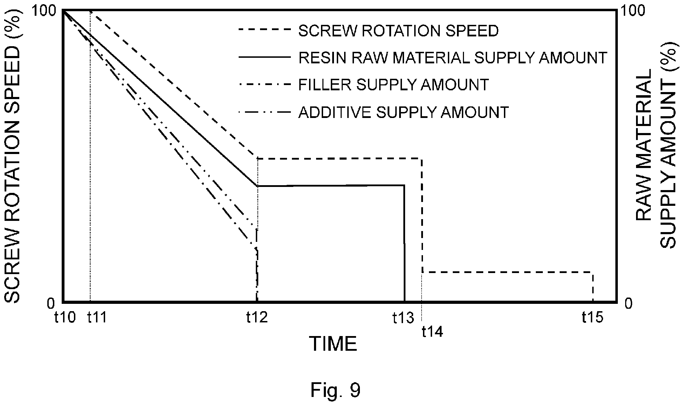

Next, a method for controlling the kneading extrusion apparatus when the extruder 10 is stopped will be described with reference to Fig. 9.

Fig. 9 is a graph showing a stopping-time supply pattern for a resin raw material, that for a filler, and that for an additive, stored in the memory unit MEM. Fig. 9 corresponds to Fig. 4.

In Fig. 9, the horizontal axis indicates time, and the left-side vertical axis indicates the rotation speed of the screw 12. Further, the right-side vertical axis indicates the supply amounts of the resin raw material, the filler, and the additive. In Fig. 9, the rotation speed of the screw 12 is shown as a percentage (%) to the rotation speed at the moment when the stopping operation is started. Similarly, in Fig. 9, the supply amounts of the resin raw material, the filler, and the additive are shown as percentages (%) to the supply amounts at the moment when the stopping operation is started.

Similarly to the starting operation, the controller CNT reads out the stopping-time supply patterns for the resin raw material, for the filler, and for the additive shown in Fig. 9 from the memory unit MEM based on the input information received from the operation panel OP.

The curve for the rotation speed of the screw 12 shown by a broken line in Fig. 9 is the same as the curve shown in Fig. 4. The controller CNT controls the rotation speed of the screw 12 so that the screw 12 rotates according to the curve.

Further, the curve for the supply amount of the resin raw material shown by a solid line in Fig. 9 is the same as the curve shown in Fig. 4. The controller CNT controls the resin raw material feeder F1 so that the resin raw material is supplied according to the curve.

Further, the curve for the supply amount of the filler shown by a dash-dot line in Fig. 9 is the same as the curve shown in Fig. 4. The controller CNT controls the filler feeder F2 so that the filler is supplied according to the curve.

In addition, in this embodiment, the controller CNT controls the additive feeder F3 so that the additive is supplied according to the curve for the supply amount of the additive shown by a dash-dot-dot line in Fig. 9.

Details of a method for controlling the kneading extrusion apparatus when the extruder 10 is stopped will be described hereinafter with reference to Fig. 9.

Firstly, at a time t10, the amounts of the resin raw material, the filler, and the additive are started to be gradually reduced while maintaining the rotation speed of the screw 12 constant. Note that if the rotation speed of the screw 12 is lowered first, there is a possibility that the ratios of the supply amounts of the resin raw material, the filler, and the additive to the rotation speed of the screw 12 becomes so high that they may not be extruded.

Next, at a time t11, the rotation speed of the screw 12 is started to be gradually lowered.

During a period from the time t11 to a time t12, the rotation speed of the screw 12 is gradually lowered, and the supply amounts of the resin raw material, the filler, and the additive are also reduced with the decrease in the rotation speed. During this period, as shown in Fig. 9, the ratios of the supply amounts of the resin raw material, the filler, and the additive to the rotation speed of the screw 12 is smaller than the ratio during the manufacturing.

Further, as shown in Fig. 9, during this period, the ratios of the supply amounts of the filler and the additive to the supply amount of the resin raw material is gradually reduced. The content of the filler in the molten resin raw material gradually decreases and the viscosity of the molten resin raw material gradually decreases, so that the stopping operation is stabilized. For example, if the supply amount of the filler is sharply reduced, a part of the resin having high viscosity present on the downstream side becomes unable to be extruded due to the presence of a part of the resin having low viscosity present on the upstream side.

At a time t12, the supply of the additive in addition to the filler is also stopped. The rotation speed and the supply amounts at and after the time t12 are similar to those in Fig. 4, and therefore the descriptions thereof will be omitted.

As shown in Fig. 9, even in the kneading extrusion apparatus according to this embodiment, when the extruder 10 is stopped, the supply of the filler is stopped before the supplying of the resin raw material is stopped. Therefore, the filler is never supplied in the state where there is not a sufficient amount of resin raw material in the extruder 10, so that it is possible prevent the extruder 10 from breaking down.

The method for controlling the kneading extrusion apparatus when the interior of the cylinder 11 of the extruder 10 is cleaned is similar to that in the first embodiment, and therefore the description thereof will be omitted.

### (Third Embodiment)

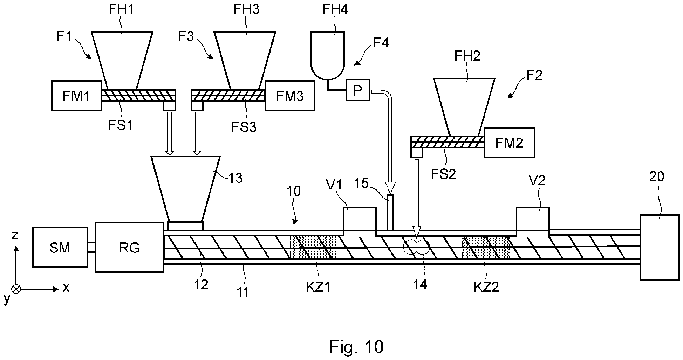

Next, an overall configuration of a kneading extrusion apparatus according to a third embodiment will be described with reference to Fig. 10. Fig. 10 is a schematic cross-sectional diagram showing the overall configuration of the kneading extrusion apparatus according to the third embodiment. Fig. 10 corresponds to Figs. 1 and 6.

As shown in Fig. 10, the kneading extrusion apparatus according to the third embodiment includes a liquid feeder F4 in addition to the resin raw material feeder F1, the filler feeder F2, the additive feeder F3, the extruder 10, and the die 20 shown in Fig. 6.

The liquid feeder F4 is a feeder for supplying a liquid raw material into the cylinder 11 of the extruder 10. The liquid feeder F4 shown in Fig. 10 is a pump-type feeder, and includes a feeder hopper FH4 and a pump P.

The liquid raw material is not limited to any particular liquid materials, and may be processing oil, alcohol, water, or the like.

The liquid raw material is charged into the feeder hopper FH4 and stored therein. When the pump P is driven, the liquid raw material stored in the feeder hopper FH4 is charged into the cylinder 11 through a nozzle 15 provided in the cylinder 11. For example, it is possible to control the supply amount of the liquid raw material from the liquid feeder F4 to the extruder 10 by measuring the change in the mass of the liquid raw material in the feeder hopper FH4 and performing feedback control on the pump P based on the measured change.

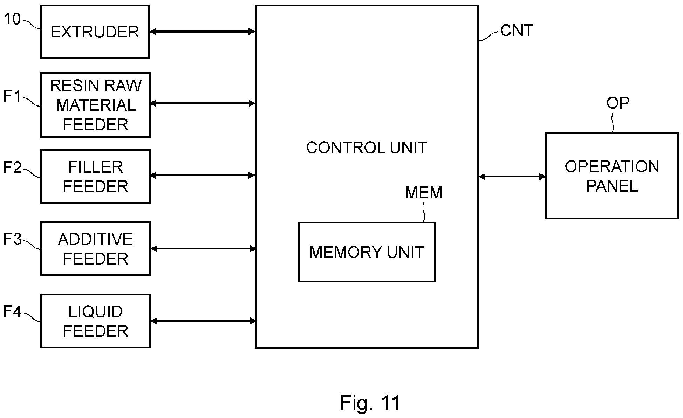

As will be described later in detail, the supply amount of the additive from the additive feeder F3 to the extruder 10 is controlled by the controller CNT shown in Fig. 11. Although the additive feeder F3 shown in Fig. 10 is a pump-type one, any of other types of feeders may be used as long as the supply amount of the additive can be controlled by the controller CNT, i.e., by a computer.

The rest of the configuration is similar to that of the kneading extrusion apparatus according to the second embodiment, and therefore the description thereof will be omitted.

<Configuration of Controller of Kneading Extrusion Apparatus>

Next, a configuration of a controller of a kneading extrusion apparatus according to this embodiment will be described with reference to Fig. 11. Fig. 11 is a control block diagram of the kneading extrusion apparatus according to the third embodiment. Fig. 11 corresponds to Figs. 2 and 7.

As shown in Fig. 11, the kneading extrusion apparatus according to the third embodiment includes a controller CNT and an operation panel OP.

As shown in Fig. 11, the controller CNT controls a liquid feeder F4 in addition to the extruder 10, the resin raw material feeder F1, the filler feeder F2, and the additive feeder F3.

More specifically, the controller CNT controls the rotation speed of the screw 12. Further, the controller CNT controls the supply amount of the liquid raw material from the liquid feeder F4 in addition to the supply amount of the resin raw material from the resin raw material feeder F1, the supply amount of the filler from the filler feeder F2, and the supply amount of the additive from the additive feeder F3.

Note that as shown in Fig. 11, the controller CNT includes a memory unit MEM.

In the memory unit MEM, a starting-time supply pattern for the resin raw material, that for the filler, that for the additive, and that for the liquid raw material, which are used when the extruder 10 is started in order to manufacture a resin compound, are stored. Each of the starting-time supply patterns for the resin raw material, the filler, the additive, and the liquid raw material is determined in advance.

The starting-time supply pattern for the liquid raw material is not shown in the drawings, but it will be briefly described hereinafter with reference to Fig. 8.

For example, in Fig. 8, the supply of the liquid raw material is started at a timing that is later than the time t6 at which the supply of the additive is started and earlier than the time t3 at which the supply of the filler is started. Then, the supply amount of the liquid raw material is increased with the increase in the rotation speed of the screw 12.

Further, in the memory unit MEM, a stopping-time supply pattern for the resin raw material, that for the filler, that for the additive, and that for the liquid raw material, which are used when the extruder 10 is stopped, are stored. Each of the stopping-time supply patterns for the resin raw material, the filler, the additive, and the liquid raw material is determined in advance.

The stopping-time supply pattern for the liquid raw material is not shown in the drawings, but it will be briefly described hereinafter with reference to Fig. 9.

For example, at a time t10 in Fig. 9, the amount of the liquid raw material as well as those of the resin raw material, the filler, and the additive are started to be gradually reduced while maintaining the rotation speed of the screw 12 constant. Then, at a time t12, the supply of the liquid raw material is stopped together with those of the filler and the additive.

Further, similarly to the first embodiment, in the memory unit MEM, a cleaning-time supply pattern for the resin raw material for supplying the resin raw material when the interior of the cylinder 11 of the extruder 10 is cleaned is stored. The cleaning-time supply pattern for the resin raw material is determined in advance.

The operation panel OP is an input device by which an operator operates the kneading extrusion apparatus. The operator enters, through the operation panel OP, the supply amount of the liquid raw material in addition to the rotation speed of the screw 12 during the manufacturing, and the supply amounts of the resin raw material, the filler, and the additive. Further, the operator selects the type of the raw material and the supply position thereof (the hopper 13, the side supply port 14, or the nozzle 15).

For example, in the case of the kneading extrusion apparatus according to this embodiment, the resin raw material is selected as the type of the raw material and the hopper 13 is selected as the supply position. Further, the filler is selected as the type of another raw material and the side supply port 14 is selected as the supply position. Further, the operator selects an additive(s) as a type of another raw material and also selects the hopper 13 as the supply position. Further, the operator selects a liquid raw material as a type of raw material and also selects the nozzle 15 as the supply position.

The rest of the configuration is similar to that of the kneading extrusion apparatus according to the second embodiment, and therefore the description thereof will be omitted.

In the above-described examples, the program includes a set of instructions (or software codes) that, when read into a computer, causes the computer to perform one or more of the functions described in the example embodiments. The program may be stored in a non-transitory computer readable medium or in a physical storage medium. By way of example rather than limitation, a computer readable medium or a physical storage medium may include a random-access memory (RAM), a read-only memory (ROM), a flash memory, a solid-state drive (SSD), or other memory technology, a CD-ROM, a digital versatile disc (DVD), a Blu-ray (Registered Trademark) disc or other optical disc storages, a magnetic cassette, magnetic tape, and a magnetic disc storage or other magnetic storage devices. The program may be transmitted on a transitory computer readable medium or a communication medium. By way of example rather than limitation, the transitory computer readable medium or the communication medium may include electrical, optical, acoustic, or other forms of propagating signals.

The invention made by the inventors of the present application has been described above in a concrete manner based on embodiments. However, the present invention is not limited to the above-described embodiments, and needless to say, various modifications can be made without departing from the spirit and scope of the invention.

This application is based upon and claims the benefit of priority from Japanese patent application No. 2021-176036, filed on October 28, 2021, the disclosure of which is incorporated herein in its entirety by reference.

### Reference Signs List

- 10: EXTRUDER
- 11: CYLINDER
- 12: SCREW
- 13: HOPPER
- 14: SIDE SUPPLY PORT
- 15: NOZZLE
- 20: DIE
- CNT: CONTROLLER
- F1: RESIN RAW MATERIAL FEEDER
- F2: FILLER FEEDER
- F3: ADDITIVE FEEDER
- F4: LIQUID FEEDER
- FH1-FH4: FEEDER HOPPER
- FM1-FM3: FEEDER MOTOR
- FS1-FS3: FEEDER SCREW
- KZ1, KZ2: KNEADING ZONE
- MEM: STORAGE UNIT
- OP: OPERATION PANEL
- P: PUMP
- RG: REDUCTION GEAR
- SM: SCREW MOTOR
- V1, V2: VENT

## Claims

1. A kneading extrusion apparatus comprising:
a first feeder configured to supply a resin raw material;
a second feeder configured to supply a filler;
an extruder configured to mix and knead the resin raw material supplied from the first feeder with the filler supplied from the second feeder while melting the resin raw material; and
a controller configured to control the first and second feeders and the extruder, wherein
the controller is further configured to, when the controller starts the extruder in order to manufacture a resin compound from the mixed and kneaded resin raw material and the filler,
increase an amount of the resin raw material to be supplied with an increase in a rotation speed of a screw of the extruder based on a predetermined starting-time supply pattern for the resin raw material; and
start, after the supplying of the resin raw material is started, the supply of the filler, and increase an amount of the filler to be supplied with the increase in the rotation speed of the screw based on a predetermined starting-time supply pattern for the filler.

2. The kneading extrusion apparatus according to claim 1, wherein
the extruder comprises a cylinder in which the screw is housed,
a first supply port configured to supply the resin raw material and a second supply port configured to supply the filler are provided in the cylinder, and
the second supply port is disposed downstream from the first supply port in an extrusion direction.

3. The kneading extrusion apparatus according to claim 1, further comprising a third feeder configured to supply an additive, wherein
when the controller starts the extruder in order to manufacture the resin compound, the controller starts, based on a predetermined starting-time supply pattern for the additive, to supply the additive after the supplying of the resin raw material is started and before the supplying of the filler is started, and increases the supply of the additive with the increase in the rotation speed of the screw.

4. The kneading extrusion apparatus according to claim 1, wherein when the controller stops the extruder, the controller:
reduces the amount of the resin raw material to be supplied with a decrease in the rotation speed of the screw based on a predetermined stopping-time supply pattern for the resin raw material; and
reduces the amount of the filler to be supplied with the decrease in the rotation speed of the screw and stops the supply of the filler before stopping the supply of the resin raw material based on a predetermined stopping-time supply pattern for the filler.

5. The kneading extrusion apparatus according to claim 1, wherein before the resin compound is manufactured, the controller cleans an interior of the extruder by supplying only the resin raw material to the extruder while rotating the screw based on a predetermined cleaning-time supply pattern for the resin raw material.

6. A kneading extrusion apparatus comprising:
a first feeder configured to supply a resin raw material;
a second feeder configured to supply a filler;
an extruder configured to mix and knead the resin raw material supplied from the first feeder with the filler supplied from the second feeder while melting the resin raw material; and
a controller configured to control the first and second feeders and the extruder, wherein
when the controller stops the extruder, the controller:
reduces an amount of the resin raw material to be supplied with a decrease in the rotation speed of the screw of the extruder based on a predetermined stopping-time supply pattern for the resin raw material; and
reduces the amount of the filler to be supplied with the decrease in the rotation speed of the screw and stops the supply of the filler before stopping the supply of the resin raw material based on a predetermined stopping-time supply pattern for the filler.

7. A method for controlling a kneading extrusion apparatus, the kneading extrusion apparatus comprising:
a first feeder configured to supply a resin raw material;
a second feeder configured to supply a filler; and
an extruder configured to mix and knead the resin raw material supplied from the first feeder with the filler supplied from the second feeder while melting the resin raw material, wherein
when the extruder is started in order to manufacture a resin compound from the mixed and kneaded resin raw material and the filler, a computer:
increases an amount of the resin raw material to be supplied with an increase in a rotation speed of a screw of the extruder based on a predetermined starting-time supply pattern for the resin raw material; and
starts, after the supplying of the resin raw material is started, to supply the filler, and increases an amount of the filler to be supplied with the increase in the rotation speed of the screw based on a predetermined starting-time supply pattern for the filler.

8. The method for controlling the kneading extrusion apparatus according to claim 7, wherein
the extruder comprises a cylinder in which the screw is housed,
a first supply port configured to supply the resin raw material and a second supply port configured to supply the filler are provided in the cylinder, and
the second supply port is disposed downstream from the first supply port in an extrusion direction.

9. The method for controlling the kneading extrusion apparatus according to claim 7, wherein
the kneading extrusion apparatus further comprises a third feeder configured to supply an additive,
when the extruder is started in order to manufacture the resin compound, the computer starts to supply the additive after the supplying of the resin raw material is started and before the supplying of the filler is started and increases the supply of the additive with the increase in the rotation speed of the screw based on a predetermined starting-time supply pattern for the additive.

10. The method for controlling the kneading extrusion apparatus according to claim 7, wherein when the extruder is stopped, the computer:
reduces the amount of the resin raw material to be supplied with a decrease in the rotation speed of the screw based on a predetermined stopping-time supply pattern for the resin raw material; and
reduces the amount of the filler to be supplied with the decrease in the rotation speed of the screw and stops the supply of the filler before stopping the supply of the resin raw material based on a predetermined stopping-time supply pattern for the filler.

11. The method for controlling the kneading extrusion apparatus according to claim 7, wherein before the resin compound is manufactured, the computer cleans an interior of the extruder by supplying only the resin raw material to the extruder while rotating the screw based on a predetermined cleaning-time supply pattern for the resin raw material.

12. A method for controlling a kneading extrusion apparatus, the kneading extrusion apparatus comprising:
a first feeder configured to supply a resin raw material;
a second feeder configured to supply a filler; and
an extruder configured to mix and knead the resin raw material supplied from the first feeder with the filler supplied from the second feeder while melting the resin raw material, wherein
when the extruder is stopped, the computer:
reduces an amount of the resin raw material to be supplied with a decrease in the rotation speed of the screw of the extruder based on a predetermined stopping-time supply pattern for the resin raw material; and
reduces the amount of the filler to be supplied with the decrease in the rotation speed of the screw and stops the supply of the filler before stopping the supply of the resin raw material based on a predetermined stopping-time supply pattern for the filler.

13. A method for manufacturing a resin compound by an extruder, comprising mixing and kneading a resin raw material supplied from a first feeder with a filler supplied from a second feeder while melting the resin raw material, wherein
when the extruder is started in order to manufacture the resin compound, a computer:
increases an amount of the resin raw material to be supplied with an increase in a rotation speed of a screw of the extruder based on a predetermined starting-time supply pattern for the resin raw material; and
starts, after the supplying of the resin raw material is started, to supply the filler, and increases an amount of the filler to be supplied with the increase in the rotation speed of the screw based on a predetermined starting-time supply pattern for the filler.

14. A method for manufacturing a resin compound by an extruder, comprising mixing and kneading a resin raw material supplied from a first feeder with a filler supplied from a second feeder while melting the resin raw material, wherein
when the extruder is stopped, a computer:
reduces an amount of the resin raw material to be supplied with a decrease in the rotation speed of the screw of the extruder based on a predetermined stopping-time supply pattern for the resin raw material; and
reduces the amount of the filler to be supplied with the decrease in the rotation speed of the screw and stops the supply of the filler before stopping the supply of the resin raw material based on a predetermined stopping-time supply pattern for the filler.
